Europäisches Patentamt

European Patent Office

Office européen des brevets

(19)

(11) Numéro de publication: **0 493 144 B1**

(12) **FASCICULE DE BREVET EUROPEEN**

(45) Date de publication de fascicule du brevet: **12.04.95**

(51) Int. Cl.⁶: **B01D 3/12**, B01D 1/22, B01D 1/00, H05B 6/10, H05B 6/40, H05B 6/42, H05B 6/44

(21) Numéro de dépôt: **91403130.7**

(22) Date de dépôt: **20.11.91**

(54) **Appareil de distillation moléculaire à chauffage par induction.**

(30) Priorité: **21.11.90 FR 9014518**

(43) Date de publication de la demande: **01.07.92 Bulletin 92/27**

(45) Mention de la délivrance du brevet: **12.04.95 Bulletin 95/15**

(84) Etats contractants désignés: **AT BE CH DE DK ES GB GR IT LI LU NL SE**

(56) Documents cités: **FR-A- 2 206 644**

**PATENT ABSTRACTS OF JAPAN vol. 12, no. 159 (C-495)(3006) 14 Mai 1988**

(73) Titulaire: **EXPANCHIMIE S.A.R.L. 77, bd de la Mission-Marchand F-92400 Courbevoie (FR)**

(72) Inventeur: **Nuns,Jacques 6 rue du Châteaud'eau F-77250 Ecuelles (FR)**
Inventeur: **Girault,Alain 7 rue du Paradis F-77250 Ecuelles (FR)**
Inventeur: **Rancurel Alain 3 rue de Ouarville F-28300 Leves (FR)**

(74) Mandataire: **Martin, Jean-Jacques Cabinet REGIMBEAU 26, Avenue Kléber F-75116 Paris (FR)**

Rank Xerox (UK) Business Services
(3.10/3.09/3.3.3)

**Description**

La présente invention concerne d'une façon générale un appareil de distillation moléculaire ainsi qu'un procédé de fabrication d'un ensemble rotor conique/dispositif de chauffage pour un tel appareil.

On connaît déjà par la JP-A-62-273003 un appareil de distillation moléculaire qui est équipé d'un dispositif de chauffage par induction. Plus précisément, un enroulement en spirale conique est prévu au-dessous du rotor conique de distillation et est alimenté par un générateur approprié de manière à chauffer le cône par induction.

Une telle technique connue est intéressante car elle permet de s'affranchir des problèmes liés dans les appareils plus anciens au chauffage par effet joule à l'aide de résistances rayonnant en direction du rotor.

Cependant, cet appareil connu à chauffage par induction présente lors de son utilisation pratique de nombreux inconvénients.

Tout d'abord, on observe dans cet appareil un chauffage excessivement lent du liquide à distiller alors qu'il commence à s'étaler sur le cône tournant par le jeu de la force centrifuge, à partir de son centre, tandis qu'au contraire le liquide est excessivement chauffé dans la région des bords du cône. En fait, le liquide à distiller arrive au centre du cône dans un état froid ou seulement légèrement réchauffé, et l'apport d'énergie calorifique est insuffisant pour l'amener rapidement à la température de distillation. Ensuite, l'épaisseur du film de liquide sur le cône diminue sensiblement du centre vers les bords du cône. Ce phénomène est le résultat d'une part de l'accroissement de la surface et de la force centrifuge appliquée au film à mesure que l'on s'écarte du centre, et d'autre part de la diminution de la quantité de matière liquide provoquée par l'évaporation de la fraction volatile.

Ainsi, avec l'appareil connu, l'apport de puissance calorifique est excessif dans la région périphérique du cône, si bien que le liquide peut être amené à température trop élevée et voir ses qualités se dégrader.

On explique ces phénomènes par le fait qu'un inducteur spiral unique tel que décrit dans la demande de brevet précitée applique au rotor conique une densité de puissance essentiellement constante du centre vers les bords (situation théorique).

En pratique, die à des effets de bord et à la conductibilité du cône, la température du cône ne sera pas constante sur toute l'étendue de l'inducteur.

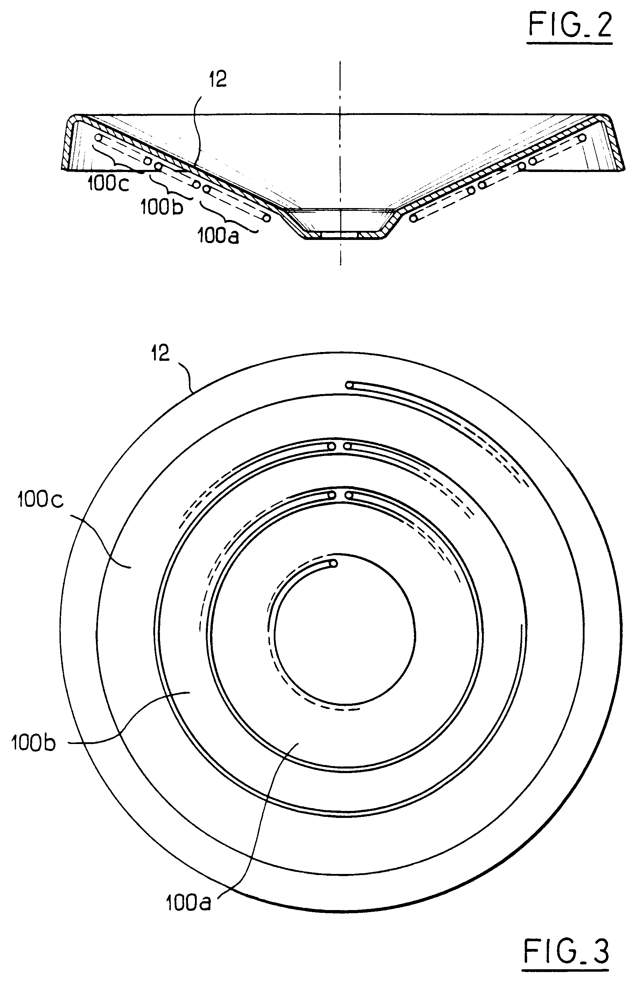

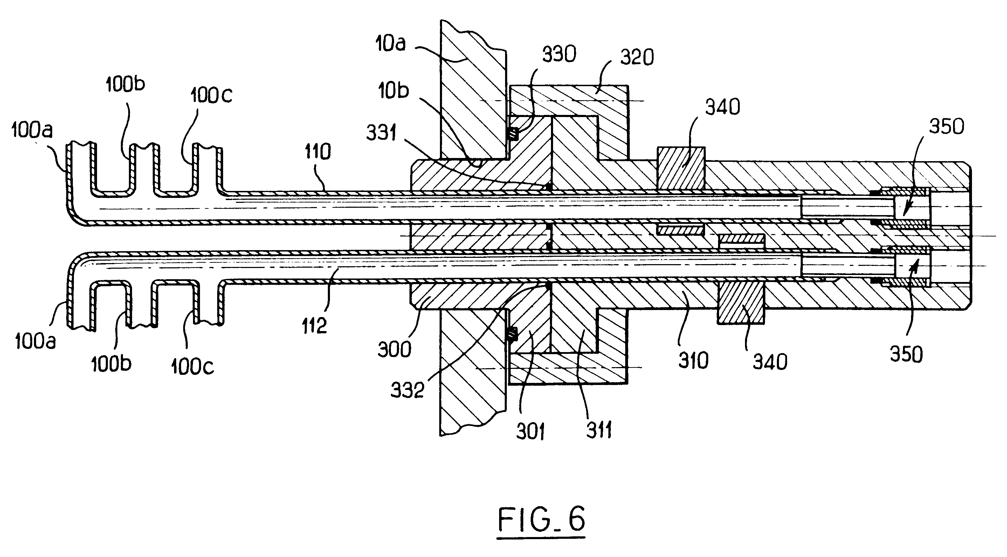

FR-A-2 206 644 décrit un appareil de chauffage par induction pour ustensiles de cuisine. Dans un mode de réalisation (figures 3 et 4) l'appareil comprend trois enroulements en spirale concentriques et coplanaires. Afin d'obtenir une distribution de la température sensiblement constante sur toute la surface à chauffer, seules les spirales intérieure et extérieure sont activées.

Cet appareil connu présente par ailleurs d'autres inconvénients. Tout d'abord, étant donné qu'une couche d'isolant thermique est nécessairement interposée entre l'inducteur en spirale et le cône, il en résulte l'existence d'une distance importante entre ces deux derniers éléments, typiquement de 5 à 20 mm, si bien que le rendement du système de chauffage est extrêmement faible. En outre, étant donné que le conducteur métallique constituant l'inducteur est directement exposé aux vapeurs qui se dégagent du cône de distillation (ces vapeurs pouvant contourner l'isolant apparamment sans obstacle), il peut en résulter une corrosion du conducteur, limitant sa durée de vie, ainsi qu'une éventuelle pollution du distillat à l'état vapeur par des traces du métal du conducteur, ce qu'il faut éviter dans la majorité des applications. En effet une telle pollution peut entraîner une plus grande fragilité du produit à l'oxydation (effet catalytique) et/ou une toxicité de ce produit notamment dans le cas de l'application de l'appareil à des substances alimentaires ou pharmaceutiques.

La présente invention vise à pallier ces inconvénients de la technique antérieure.

Plus précisément, l'invention vise en premier lieu à proposer un nouveau dispositif de chauffage par induction qui permette, à l'aide de moyens simples et économiques, d'appliquer au cône une densité de puissance calorifique différente au centre du rotor et au niveau de ses bords.

Elle propose à cet effet un appareil de distillation moléculaire, du type comprenant un rotor conique métallique entraîné en rotation et alimenté en son centre par un liquide à distiller, une cloche à vide définissant une enceinte abritant le cône et des moyens de chauffage par induction du rotor situés au-dessous et à proximité de celui-ci, caractérisé en ce que les moyens de chauffage comprennent au moins deux inducteurs concentriques apportant à des régions homologues du rotor des densités de puissance calorifique différentes et en ce qu'un inducteur intérieur apporte au rotor une densité de puissance calorifique supérieure à la densité de puissance apportée au rotor par un inducteur extérieur.

de préférence, pour pouvoir disposer les conducteurs des inducteurs à très grande proximité du rotor, sans qu'il en résulte un échauffement excessif de ces conducteurs par rayonnement à partir du rotor, on propose un appareil de distillation moléculaire du type décrit ci-dessus caractérisé les inducteurs sont pourvus de moyens de refroidissement et sont situés à une distance du rotor inférieure ou égale à environ

2

EP 0 493 144 B1

5 mm.

Selon un autre aspect de la présente invention, il est proposé un procédé de fabrication d'un ensemble de rotor conique et d'inducteurs pour un appareil de distillation moléculaire tel que défini ci-dessus, caractérisé par les étapes consistant à:

mouler sur la surface inférieure du rotor une couche mince de matière plastique armée d'épaisseur essentiellement uniforme,

séparer ladite couche du rotor après durcissement,

former les inducteurs, qui sont constitués par des tubes métalliques aptes à être mis en forme en utilisant ladite couche mince comme gabarit contre lequel les tubes sont étroitement appliqués sous forme de spirales coniques concentriques,

surmouler les tubes positionnés sur ladite couche mince avec une seconde couche de matière plastique recouvrant les inducteurs et venant se lier à ladite couche de matière plastique armée, et

fixer l'ensemble ainsi obtenu au-dessous du rotor à une distance appropriée.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels:

la figure 1 est une vue d'ensemble schématique d'un appareil de distillation moléculaire réalisé conformément à la présente invention,

la figure 2 est une vue en coupe axiale d'une partie de l'appareil de la figure 1,

la figure 3 est une vue en plan de dessous de la partie de la figure 2,

la figure 4 est un schéma électrique partiel du dispositif de chauffage par induction de l'appareil de la figure 1,

la figure 5 combine une vue en coupe axiale et un graphique montrant une caractéristique de chauffage de l'appareil,

la figure 6 est une vue en coupe axiale d'une construction de traversée de paroi utilisée dans l'appareil de l'invention, et

les figures 7a à 7d illustrent les étapes d'un procédé de réalisation d'une partie de l'appareil des figures 1 à 3.

On notera préliminairement que, d'une figure à l'autre, des éléments ou parties identiques ou similaires ont été désignés par les mêmes signes de référence.

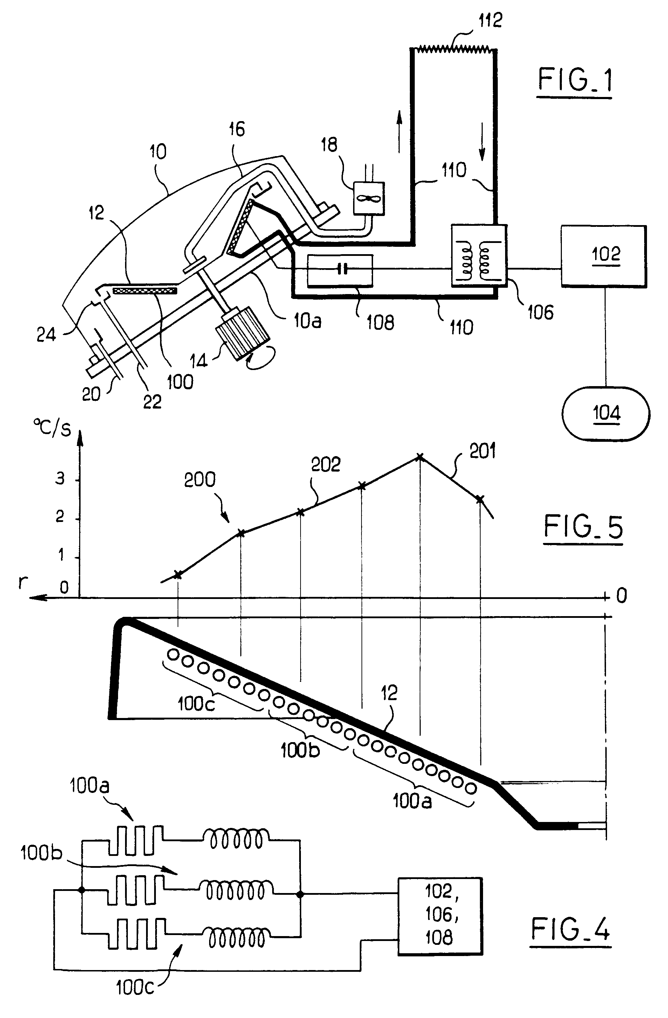

En référence tout d'abord à la figure 1, on a représenté un appareil de distillation moléculaire qui comprend une cloche à vide 10 fixée sur une plaque de base 10a et dans laquelle un vide approprié est établi par une pompe à vide (non illustrée). Un rotor conique 12 est monté sur l'axe de sortie d'un motoréducteur 14 situé à l'extérieur de la cloche. Le rotor 12 est alimenté en son centre par un conduit 16 traversant par exemple la plaque de base 10a de la cloche et alimenté à l'extérieur de celle-ci en produit à distiller. Une pompe volumétrique 18 prévue dans le conduit 16 permet d'amener au centre du cône 12 le liquide à distiller avec un débit constant, ajustable en fonction du produit à traiter. Le cône 12 est métallique et chauffé par un dispositif de chauffage par induction, décrit plus loin, pour provoquer l'évaporation contrôlée d'une fraction volatile du liquide. La plaque de base 10a comporte des passages de sortie 20 et 22 respectivement pour recueillir la fraction évaporée puis condensée sur la cloche et pour recueillir la fraction qui ne s'est pas évaporée et qui s'est échappée sous l'effet de la force centrifuge à la périphérie du cône, dans une gorge appropriée 24.

Ces moyens, à l'exception du dispositif de chauffage, sont classiques et ne seront pas décrits plus en détail.

Le dispositif de chauffage comprend une pluralité d'inducteurs (comme détaillé plus loin), schématiquement indiqués en 100, enroulés en spirale au-dessous du rotor 12. Ces inducteurs sont alimentés par un générateur 102 relié à la tension du réseau 104, via un transformateur 106 et un condensateur 108. De préférence, la fréquence du courant d'induction délivré est comprise par exemple entre 1 et 30 kHz, de préférence entre 5 et 25 kHz. Les inducteurs sont de préférence réalisés sous forme de tubes métalliques creux, par exemple des tubes de cuivre, refroidis par un circuit de refroidissement à liquide (tel que de l'eau) comportant des conduits 110 et un échangeur 112. Ce circuit 110, 112 peut être également utilisé pour refroidir le transformateur 106, comme illustré.

Il est à noter ici que l'utilisation pour les inducteurs de tubes refroidis va permettre, selon un mode de réalisation préféré de la présente invention, de disposer les inducteurs à grande proximité du rotor, afin d'optimiser le rendement du couplage inductif. Plus précisément, grâce à ce refroidissement, la chaleur importante rayonnée par le rotor en direction des inducteurs n'induit pas un échauffement excessif de ceux-ci.

3

Une telle caractéristique permet en particulier d'accroître la puissance calorifique fournie au rotor en augmentant le courant dans les inducteurs.

Concrètement, la distance entre le ou les inducteurs et le rotor est avantageusement inférieure ou égale à environ 5 mm, et de préférence comprise entre 1 et 3 mm et de façon encore plus préférée voisine de 2 mm.

Selon un aspect essentiel de la présente invention, afin d'appliquer au rotor de densité de puissance calorifique ayant un profil, en direction radiale, bien adapté au traitement, on utilise au moins deux inducteurs concentriques, de préférence réalisés chacun par enroulement en spirale conique d'un tube métallique.

L'objet d'une telle disposition d'inducteurs est en particulier d'appliquer au cône 12 une densité de puissance calorifique qui soit plus élevée dans la région du centre et qui soit plus faible dans la région des bords, par rapport à une valeur moyenne, afin de pallier les inconvénients du dispositif à inducteur unique discuté en introduction. On a constaté que ce résultat pouvait être obtenu en alimentant les deux inducteurs (ou davantage) en parallèle par un même générateur. Typiquement, le dispositif à plusieurs inducteurs concentriques de l'invention, par un choix judicieux de la position et des dimensions de la couronne dans laquelle est inscrit chaque inducteur, et du nombre de spires de chaque inducteur, permet d'obtenir une vaste gamme de profils de densité de puissance le long d'un rayon du rotor.

On va maintenant décrire en référence aux figures 2 et 3 une disposition d'inducteurs préférée. On y a représenté le rotor conique 12 et trois inducteurs concentriques, à savoir un inducteur intérieur 100a, un inducteur intermédiaire 100b et un inducteur extérieur 100c. L'inducteur intermédiaire permet d'assurer une décroissance régulière et de faible pente de la densité de puissance entre la région proche du centre du rotor et la région de ses bords.

Dans cet exemple, le rotor 12 est réalisé de préférence soit en acier inoxydable, soit encore en un matériau composite composé d'une couche supérieure d'acier inoxydable de qualité alimentaire (côté liquide), par exemple de type 316, d'une couche intermédiaire d'aluminium et d'une couche inférieure d'acier inoxydable magnétique. Un tel composite est connu notamment sous la désignation commerciale "Duranell" (Marque déposée). Un tel matériau composite est avantageux par le fait qu'il permet d'obtenir un bon couplage inductif bien qu'il doive incorporer un acier de qualité alimentaire (type 316) dont les qualités magnétiques seraient en tant que telles inappropriées. Plus précisément, la couche inférieure d'acier magnétique assure un couplage efficace avec les inducteurs, tandis que les qualités de conductibilité thermique de la couche intermédiaire d'aluminium assurent le transfert vers la couche supérieure de la chaleur engendrée dans la couche inférieure par induction.

En variante, on peut utiliser pour le rotor un matériau composite comportant une couche centrale en acier doux et deux couches extérieures en acier magnétique, de qualité alimentaire si les conditions l'imposent. On peut utiliser notamment le composite connu sous la dénomination "Triplam" (Marque déposée).

Le rotor a de préférence une épaisseur de l'ordre de 5 mm.

Chaque inducteur est disposé au-dessous de la surface conique du rotor 12, avec un espacement suffisamment faible, typiquement de 2 mm ou moins, pour obtenir une bonne efficacité de chauffage.

Dans le présent exemple, chaque inducteur est réalisé avec un tube de cuivre de diamètre extérieur de 10 mm et d'épaisseur de paroi de 1 mm. Les spires de chaque inducteur ont en l'espèce un pas constant de l'ordre de 14 mm.

On a représenté sur la figure 4 le schéma électrique équivalent, montrant le branchement des trois inducteurs 100a, 100b et 100c en parallèle sur le même générateur 102, 106, 108.

Concrètement, on a étudié un dispositif de chauffage par induction pour un rotor en acier inoxydable de qualité alimentaire de 5 mm d'épaisseur et d'un diamètre de 90 cm. La zone dans laquelle un chauffage devait être appliqué était une couronne d'un rayon intérieur de 66 mm et d'un rayon extérieur de 417 mm. La puissance totale devant être appliquée au cône était d'environ 50 kW. En outre, le rapport entre les densités de puissance dans la région intérieure de la couronne et dans sa région extérieure devait être de l'ordre de 5 à 6. La fréquence du courant d'alimentation des inducteurs était de 27 kHz.

On va indiquer ci-dessous les caractéristiques de chaque inducteur du dispositif de chauffage répondant à ces critères:

4

| inducteur | N | D1 | D2 | V | I | P | D |
|---|---|---|---|---|---|---|---|
| intérieur | 9 | 66 | 183 | 450 | 250 | 18,25 | 19,94 |
| intermédiaire | 6 | 183 | 300 | 450 | 290 | 21,24 | 11,96 |
| extérieur | 7 | 300 | 417 | 450 | 145 | 10,51 | 3,99 |

où

N: nombre de spires;

D1: rayon intérieur de la couronne contenant l'inducteur en millimètres;

D2: rayon extérieur de la couronne contenant l'inducteur en millimètres;

V: tension d'alimentation en volts;

I: courant dans l'inducteur en ampères;

P: puissance totale délivrée par l'inducteur en kilowatts;

D: densité surfacique de puissance (théorique) en $W/cm^2$.

On observe dans ce cas que le rapport théorique entre la densité de puissance fournie par l'inducteur intérieur et celle fournie par l'inducteur extérieur est d'environ 5.

On a représenté sur la figure 5 le profil de densité de puissance obtenu concrètement le long d'un rayon du cône. Plus précisément, on a placé six thermocouples selon des espacements réguliers le long du rayon, et l'on a déterminé à chaque fois, à partir de l'instant de mise en route du chauffage par induction, la vitesse de montée en température de la surface intérieure du cône (en °C par seconde), cette vitesse étant directement proportionnelle à la densité de puissance effectivement appliquée; la courbe 200 représente schématiquement l'évolution de la densité de puissance en fonction du rayon r auquel on se place sur le cône (abcisse).

Pratiquement, du fait de divers effets de bords et de la conductibilité thermique du matériau du rotor 12, on observe non pas trois paliers distincts correspondant aux densités de puissance fournies respectivement par les trois inducteurs (situation théorique), mais une évolution plus progressive, caractérisée par une croissance relativement rapide de la densité de puissance à partir de la zone centrale froide approximativement jusqu'au milieu de l'inducteur intérieur 100a (partie de courbe 201), puis une décroissance progressive et plus lente de cette densité jusqu'à la limite extérieure de l'inducteur extérieur 100c (partie de courbe 202). Cette pente plus faible est obtenue grâce à l'incorporation de l'inducteur intermédiaire, qui délivre en soi une densité de puissance intermédiaire entre celles des inducteurs intérieur et extérieur. Par ailleurs, le rapport entre la densité de puissance maximale (à la rupture de pente entre les parties de courbe 201 et 202) et la densité de puissance minimale (à la limite extérieure de l'inducteur extérieur 100c) est de l'ordre de 6,3. Ce profil s'est avéré en pratique tout à fait adapté à la majorité des opérations de distillation moléculaire couramment effectuées, que ce soit en pharmacie, en cosmétique, en parfumerie ou en agroalimentaire.

On notera ici que l'utilisation d'un chauffage du rotor par induction, en combinaison avec l'obtention commme précité d'un profil de densité de puissance variable, permet d'apporter au liquide à distiller une puissance calorifique supérieure à ce que l'on pouvait obtenir dans la technique antérieure avec un chauffage par résistances, sans induire d'échauffement excessif dudit liquide. Concrètement, on peut obtenir un débit supérieur d'environ 50% aux débits classiquement obtenus.

On a illustré en détail sur la figure 6 un exemple de connexion des trois inducteurs 100a, 100b, 100c avec l'extérieur de la cloche. Ces trois inducteurs sont reliés à deux collecteurs 110, 112, par exemple sous forme de tubes de cuivre de plus grand diamètre, par exemple par soudure, à l'intérieur de la cloche à vide, pour ainsi assurer leur alimentation en courant et en eau de refroidissement en parallèle. Ces collecteurs 110, 112 traversent la plaque de base ou paroi arrière 10a de la cloche à vide 10.

Dans la paroi 10a est formée à cet effet une ouverture 10b dans laquelle est engagée une pièce formant bouchon 300, réalisée par exemple en polytétrafluoréthylène, traversée par deux alésages qui reçoivent étroitement, parallèlement l'une à l'autre, les deux extrémités des tubes 110, 112. Le bouchon 300 comporte à son extrémité opposée à l'intérieur de l'enceinte une bride 301 sur laquelle vient s'appuyer une bride semblable 311 d'un corps de connexion fluidique et électrique, globalement indiqué en 310 et réalisé également en polytétrafluoréthylène. Un collier de serrage 320 par exemple en aluminium peut être fixé sur la paroi 10a par des vis (non représentées) et vient enserrer ensemble et contre ladite paroi les deux brides 301 et 311. Des joints toriques 330, 331 et 332 viennent lors du serrage établir l'étanchéité requise entre les diverses pièces.

Les références 340 désignent deux dés de connexion en cuivre destinés à l'application de l'énergie électrique aux deux extrémités de l'inducteur, par l'intermédiaire de câbles appropriés provenant du générateur.

Enfin en 350 sont indiqués deux raccords pour le système de circulation d'eau froide dans les inducteurs 100a, 100b et 100c aux fins de refroidissement.

On peut noter ici que le fait de faire passer les extrémités des tubes 110, 112 au proche voisinage l'un de l'autre à la traversée de la paroi de l'enceinte minimise le champ magnétique dans cette région étant donné que ces sections de tube sont traversés par deux courants identiques mais inverses l'un de l'autre. Ceci minimise à son tour l'échauffement des parties métalliques se trouvant dans cette région.

En variante, pour annuler complètement ce champ au niveau de la traversée de paroi, on peut concevoir que les deux tubes seront à cet endroit concentriques.

Bien qu'on ne l'ait pas décrit en détail jusqu'à présent, les inducteurs de l'appareil de la présente invention peuvent être isolés de l'environnement de la cloche à vide. On évite ainsi que les vapeurs engendrées lors du processus de distillation ne viennent au contact des tubes, ce qui pourrait engendrer soit une corrosion et une dégradation de ceux-ci, soit encore une pollution desdites vapeurs et une dégradation des produits séparés comme expliqué plus haut.

Dans une forme de réalisation de base, on peut gainer les inducteurs avec un enrobage de matière plastique appropriée.

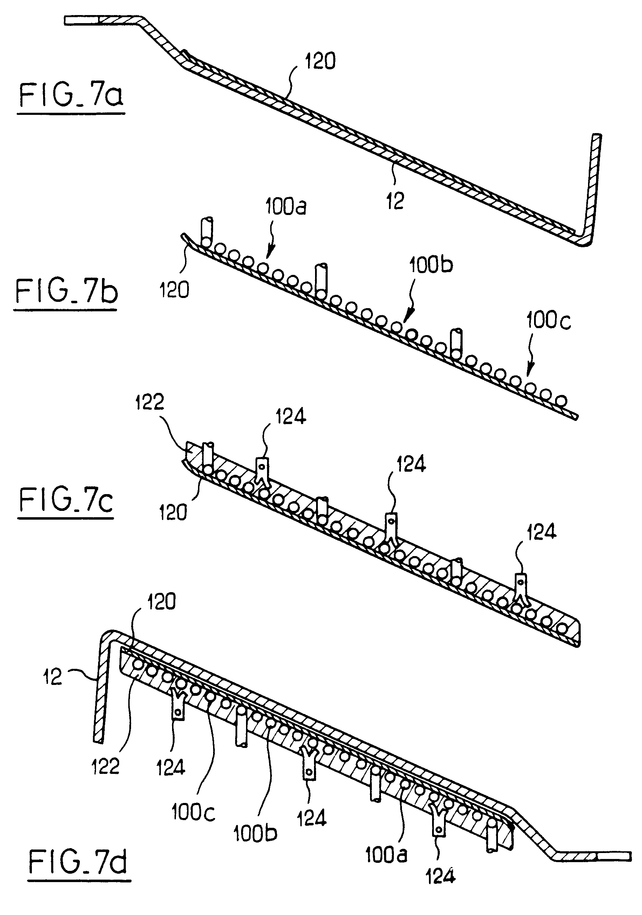

Mais selon une variante de réalisation particulièrement avantageuse, on peut réaliser des inducteurs enrobés de la manière que l'on va décrire ci-après en référence aux figures 7a à 7d.

On rappellera tout d'abord que, pour donner au dispositif de chauffage par induction un rendement satisfaisant, il est impératif que les inducteurs soient aussi proches que possible de la surface inférieure du cône de distillation, sans toutefois risquer d'entraver ou de freiner la rotation dudit cône.

Selon le procédé de l'invention, on réalise tout d'abord un gabarit en utilisant le cône 12 comme élément de moule. De préférence (figure 7a), le cône étant retourné, on coule sur la face extérieure de celui-ci une couche mince 120 de résine armée par exemple avec des fibres de verre. De préférence, l'épaisseur de cette couche est en pratique choisie égale ou de préférence sensiblement inférieure à la distance que l'on souhaite finalement obtenir entre les tubes d'inducteurs et le cône. Concrètement, cette épaisseur peut être de 1 mm.

Cette couche rigide d'épaisseur constante est alors séparée du cône et utilisée comme gabarit pour le positionnement des tubes d'inducteurs, comme l'illustre la figure 7b. Plus précisément, on assure que chaque tube, lorsqu'il est cintré en forme de spirale conique pour donner sa forme à l'inducteur, reste en permanence au contact du gabarit.

Une fois les inducteurs (en l'espèce au nombre de trois) réalisés et maintenus en place de façon appropriée, on coule alors au-dessus de l'ensemble constitué par le gabarit 120 et les tubes 100a, 100b, 100c une couche plus épaisse 122 de résine qui peut être le cas échéant armée (figure 7c). L'épaisseur de cette seconde couche 122 est choisie sensiblement supérieure au diamètre extérieur des tubes, et par exemple de 20 à 30 mm, de manière à ce que lesdits tubes y soient noyés et fermement maintenus en place après solidification. Comme illustré, des pattes de fixation 124 peuvent être ancrées dans cette seconde couche.

Cet ensemble terminé est alors fixé en une position appropriée au-dessous du rotor 12, par exemple à l'aide des pattes 124. De préférence, l'ensemble est fixé de telle manière qu'il subsiste enre ledit ensemble et le rotor un espace aussi petit que possible, sans toutefois freiner ou entraver la rotation de celui-ci (figure 7d). On réalise ainsi un ensemble de rotor et d'inducteurs dans lequel la distance entre la face inférieure du rotor et les inducteurs est aussi petite et régulière que possible, pour ainsi optimiser le rendement du chauffage du rotor par induction.

La partie des tubes d'inducteurs non revêtue lors des opérations de moulage, notamment entre les inducteurs proprement-dits et la traversée de paroi décrite plus haut en référence à la figure 6, peut être gainée avec une matière plastique appropriée telle qu'une résine.

Bien entendu, le spécialiste saura adapter les concepts de l'invention à des rotors de matériaux et de dimensions quelconques, et en outre à des conditions de distillation diverses.

Par ailleurs, bien que l'on ait indiqué dans ce qui précède que le pas des spires de chaque inducteur était constant, ce pas peut bien entendu être variable, ce qui permet d'ajuster plus finement si nécessaire le profil radial de densité de puissance.

**Revendications**

1. Appareil de distillation moléculaire, du type comprenant un rotor conique métallique (12) entraîné en rotation et alimenté en son centre par un liquide à distiller, une cloche à vide (10) définissant une enceinte abritant le cône et des moyens de chauffage par induction du rotor situés au-dessous et à proximité de celui-ci, caractérisé en ce que les moyens de chauffage comprennent au moins deux inducteurs concentriques (100a, 100b, 100c) apportant à des régions homologues du rotor des densités de puissance calorifique différentes et en ce qu'un inducteur intérieur (100a) apporte au rotor une densité de puissance calorifique supérieure à la densité de puissance apportée au rotor par un inducteur extérieur (100c).

2. Appareil selon la revendication 1, caractérisé en ce qu'il est prévu trois inducteurs concentriques (100a, 100b, 100c), avec un inducteur intermédiaire (100b) apportant une densité de puissance intermédiaire entre les densités de puissance apportées par les inducteurs intérieur et extérieur (100a, 100c).

3. Appareil selon la revendication 2, caractérisé en ce que les trois inducteurs ont des nombres de spires voisins.

4. Appareil selon l'une des revendications 1 à 3, caractérisé en ce que les inducteurs sont alimentés en parallèle par un générateur de courant alternatif commun.

5. Appareil selon l'une des revendications 1 à 4, caractérisé en ce que le rapport entre la densité de puissance appliquée au rotor par l'inducteur intérieur et la densité de puissance appliquée par l'inducteur extérieur est de l'ordre de 5 à 6.

6. Appareil selon l'une des revendications 1 à 5, caractérisé en ce qu'au moins un inducteur comporte une pluralité de spires dont le pas est variable.

7. Appareil selon l'une des revendications 1 à 6, caractérisé en ce que le rotor est réalisé en un matériau composite comportant une couche supérieure en acier inoxydable de qualité alimentaire, une couche intermédiaire en un métal doté d'une bonne conductibilité thermique et une couche inférieure en acier inoxydable magnétique.

8. Appareil selon la revendication 1, caractérisé en ce que les inducteurs sont pourvus de moyens de refroidissement et sont situés à une distance du rotor inférieure ou égale à environ 5 mm.

9. Appareil selon la revendication 8, caractérisé en ce que les inducteurs sont situés à une distance du rotor comprise entre environ 1 et 3 mm.

10. Appareil selon la revendication 8 ou 9, caractérisé en ce que chaque inducteur est réalisé sous la forme d'au moins un tube métallique creux enroulé en spirale, dans lequel circule un liquide de refroidissement.

11. Appareil selon la revendication 10, caractérisé en ce qu'il comprend au moins deux inducteurs concentriques alimentés en liquide de refroidissement en parallèle.

12. Procédé de fabrication d'un ensemble de rotor conique et d'inducteurs pour un appareil de distillation moléculaire selon l'une des revendications précédentes, caractérisé par les étapes consistant à:

mouler sur la surface inférieure du rotor (12) une couche mince (120) de matière plastique armée d'épaisseur essentiellement uniforme,

séparer ladite couche du rotor après durcissement,

former les inducteurs (100a, 100b, 100c), qui sont constitués par des tubes métalliques aptes à être mis en forme, en utilisant ladite couche mince (120) comme gabarit contre lequel les tubes sont étroitement appliqués sous forme de spirales coniques concentriques,

surmouler les tubes positionnés sur ladite couche mince (120) avec une seconde couche (122) de matière plastique recouvrant les inducteurs et venant se lier à ladite couche de matière plastique armée, et

fixer l'ensemble ainsi obtenu au-dessous du rotor à une distance appropriée.

13. Procédé selon la revendication 12, caractérisé en ce que l'étape de surmoulage est précédée par une étape de positionnement de pattes de fixation (124) aptes à être prises par la matière de surmoulage.

14. Procédé selon l'une des revendications 12 et 13, caractérisé en ce que l'épaisseur de ladite couche mince de matière plastique armée (120) est choisie légèrement inférieure à la distance qui doit séparer les inducteurs de la face inférieure du rotor.

## Claims

1. Molecular distillation apparatus of the type comprising a metallic conical rotor (12) rotatably driven and fed at its centre with a liquid to be distilled, a vacuum bell (10) defining an enclosure housing the cone and means for inductively heating the rotor which are located beneath and in proximity to the latter, characterized in that the heating means comprise at least two concentric inductors (100a, 100b, 100c) supplying different thermal power densities to homologous regions of the rotor and in that an inner inductor (100a) supplies a greater thermal power density to the rotor than the power density supplied to the rotor by an outer inductor (100c).

2. Apparatus according to Claim 1, characterized in that there are provided three concentric inductors (100a, 100b, 100c), with an intermediate inductor (100b) supplying a power density intermediate between the power densities supplied by the inner and outer inductors (100a, 100c).

3. Apparatus according to Claim 2, characterized in that the three inductors have similar numbers of turns.

4. Apparatus according to one of Claims 1 to 3, characterized in that the inductors are supplied in parallel by means of a common alternating current generator.

5. Apparatus according to one of Claims 1 to 4, characterized in that the ratio between the power density applied to the rotor by the inner inductor and the power density applied by the outer inductor is of the order of 5 to 6.

6. Apparatus according to one of Claims 1 to 5, characterized in that at least one inductor comprises a plurality of turns whose pitch is variable.

7. Apparatus according to one of Claims 1 to 6, characterized in that the rotor is made from a composite material comprising an upper layer made of food-grade stainless steel, an intermediate layer made of a metal endowed with a high thermal conductivity and a lower layer made of magnetic stainless steel.

8. Apparatus according to Claim 1, characterized in that the inductors are provided with cooling means and are located at a distance from the rotor which does not exceed approximately 5 mm.

9. Apparatus according to Claim 8, characterized in that the inductors are located at a distance from the rotor of between approximately 1 and 3 mm.

10. Apparatus according to Claim 8 or 9, characterized in that each inductor is made in the form of at least one spirally wound hollow metallic tube, in which a cooling liquid circulates.

11. Apparatus according to Claim 10, characterized in that it comprises at least two concentric inductors supplied in parallel with cooling liquid.

12. Process for manufacturing an assembly of a conical rotor and inductors for a molecular distillation apparatus according to one of the preceding claims, characterized by the steps consisting in:

moulding a thin layer (120) of reinforced plastic of essentially uniform thickness over the lower surface of the rotor (12),

separating said layer from the rotor after curing,

shaping the inductors (100a, 100b, 100c) which are constituted by metallic tubes capable of being shaped, by using said thin layer (120) as a template against which the tubes are closely applied in the form of concentric conical spirals,

moulding over the tubes, positioned on said thin layer (120), with a second layer (122) of plastic covering the inductors and binding to said layer of reinforced plastic and

fixing the assembly thus obtained beneath the rotor at a suitable distance.

13. Process according to Claim 12, characterized in that the overmoulding step is preceded by a step for positioning fixing tabs (124) capable of being held by the overmoulding material.

14. Process according to one of Claims 12 and 13, characterized in that the thickness of said thin layer of reinforced plastic material (120) is chosen to be slightly less than the distance which is to separate the inductors from the lower face of the rotor.


**Patentansprüche**

1. Vorrichtung zur Molekular-Destillation enthaltend einen drehend angetriebenen konusförmigen metallischen Rotor (12), welcher in seinem Zentrum mit einer zu destillierenden Flüssigkeit befüllt wird, mit einer eine Umgrenzung bildenden Vakuumglocke (10), in welcher der Konus und eine Induktionsheizung des Rotors aufgenommen sind, die über diesem und in seiner Nähe angeordnet sind, **dadurch gekennzeichnet, daß** die Heizvorrichtungen mindestens zwei konzentrische Induktoren (100a, 100b, 100c) enthalten, welche an homologe Bereiche des Rotors unterschiedliche Heizkraftdichten liefern, und dadurch, daß ein innerer Induktor (100a) an den Rotor eine Heizkraftdichte liefert, die höher ist, als die Heizkraftdichte, welche dem Rotor durch einen äußeren Induktor (100c) zugeführt wird.

2. Vorrichtung nach Anspruch 1,
**dadurch gekennzeichnet, daß** drei konzentrische Induktoren (100a, 100b, 100c) mit einem zwischengelagerten Induktor (100b) vorgesehen sind, welcher die Heizkraftdichten liefert, die zwischen den Heizkraftdichten liegen, welche von den inneren und äußeren Induktoren (100a, 100b) geliefert werden.

3. Vorrichtung nach Anspruch 2,
**dadurch gekennzeichnet, daß** die drei Induktoren ein benachbarte Anzahl von Windungen aufweisen.

4. Vorrichtung nach einem der Ansprüche 1 bis 3,
**dadurch gekennzeichnet, daß** die Induktoren parallel mit Hilfe eines gemeinsamen Wechselstromgenerators versorgt werden.

5. Vorrichtung nach einem der Ansprüche 1 bis 4,
**dadurch gekennzeichnet, daß** das Verhältnis zwischen der Heizkraftdichte, die von dem inneren Induktor auf den Rotor beaufschlagt wird, und der Heizkraftdichte, welche von dem äußeren Induktor beaufschlagt wird, in der Größenordnung von 5 bis 6 liegt.

6. Vorrichtung nach einem der Ansprüche 1 bis 5,
**dadurch gekennzeichnet, daß** mindestens einer der Induktoren eine Vielzahl von Windungen mit unterschiedlichen Gewindesteigungen aufweist.

7. Vorrichtung nach einem der Ansprüche 1 bis 6,
**dadurch gekennzeichnet, daß** der Rotor aus einem Verbundwerkstoff hergestellt ist, welcher eine obere Schicht aus rostfreiem Stahl mit Lebensmittelqualität aufweist, sowie eine Zwischenschicht aus einem gut wärmeleitenden Metall und eine untere Schicht aus magnetischem rostfreien Stahl.

8. Vorrichtung nach Anspruch 1,
**dadurch gekennzeichnet, daß** die Induktoren mit Kühlvorrichtungen ausgerüstet und in einem Abstand von etwa 5 mm von dem unteren Rotor angeordnet sind.

9. Vorrichtung nach Anspruch 8,
**dadurch gekennzeichnet**, **daß** die Induktoren von dem Rotor in einem Abstand angeordnet sind, welcher zwischen etwa 1 bis 3 mm liegt.

10. Vorrichtung nach einem der Ansprüche 8 oder 9,
**dadurch gekennzeichnet**, **daß** jeder der Induktoren in Form von mindestens einem in Spiralen gewickelten hohlen Metallrohr hergestellt ist, in dem eine Kühlflüssigkeit zirkuliert.

11. Vorrichtung nach Anspruch 10,
**dadurch gekennzeichnet**, **daß** sie mindestens zwei konzentrische Induktoren aufweist,, welche parallel mit Kühlflüssigkeit versorgt werden.

12. Verfahren für die Herstellung eines aus einem konischen Rotor und Induktoren bestehenden Zusammenbaus für eine Vorrichtung zur Molekular-Destillation nach einem der vorausgegangenen Ansprüche,
**dadurch gekennzeichnet**, **daß** das Verfahren folgende Schritte umfaßt:
- Beschichten der unteren Fläche des Rotors (12) mit einer dünnen Schicht (120) aus verstärktem Kunststoff weitgehend einheitlicher Dicke,
- Entfernung dieser Schicht vom Rotor nach der Aushärtung,
- Herstellung der aus verformbaren Metallrohren bestehenden Induktoren (100a, 100b, 100c) unter Verwendung der dünnen Schicht (120) als Schablone, an die die Rohre in Form von konzentrischen konischen Spiralen eng befestigt werden,
- Beschichtung der auf der dünnen Schicht (120) positionierten Rohre mit einer zweiten Schicht (122) aus Kunststoff, welche die Induktoren überdeckt und sich mit der Schicht aus verstärktem Kunststoff verbindet, und
- Befestigung des so erhaltenen Verbundes in einem geeigneten Abstand oberhalb des Rotors.

13. Verfahren nach Anspruch 12,
**dadurch gekennzeichnet**, **daß** dem Schritt der Überlagerung der Schritt der Positionierung von Befestigungsösen (124) vorausgeht, welche von dem Überlagerungsmaterial aufgenommen werden können.

14. Verfahren nach einem der Ansprüche 12 und 13,
**dadurch gekennzeichnet**, **daß** die Dicke der dünnen Schicht aus verstärktem Kunststoff (120) so gewählt wird, daß sie etwas geringer ist, als der Abstand, welcher die Induktoren von der unteren Fläche des Rotors trennt.

FIG_1

FIG_5

FIG_4

FIG. 2

12

100c

100b

100a

12

100c

100b

100a

FIG. 3

FIG.6

EP 0 493 144 B1

FIG. 7a

FIG. 7b

FIG. 7c

FIG. 7d